# EUROPEAN PATENT APPLICATION

(11) **EP 4 624 415 A1**
(43) Date of publication of application: **01.10.2025**
(21) Application number: 23794856.7
(22) Date of filing: 20.03.2023
(51) Int. Cl.: C01B 25/45, H01M 4/58, H01M 4/62, H01M 10/0525

(54) **COMPOSITE LITHIUM MANGANESE IRON PHOSPHATE POSITIVE ELECTRODE MATERIAL, AND PREPARATION METHOD AND APPLICATION THEREOF**

(30) Priority: 14.12.2022 CN 202211611373
(71) Applicant: Eve Power Co., Ltd., Jingmen, Hubei 448000 (CN)
(72) Inventor: LIU, Fanfen, Jingmen, Hubei 448000 (CN); WEN, Shengyao, Jingmen, Hubei 448000 (CN); ZHANG, Lin, Jingmen, Hubei 448000 (CN); YUAN, Dingding, Jingmen, Hubei 448000 (CN)
(74) Representative: Berggren Oy
(86) International application number: PCT/CN2023/082477
(87) International publication number: WO 2023/207421

(57) **Abstract**

The application provides a composite lithium manganese iron phosphate positive electrode material, and a preparation method and application thereof. The preparation method comprises the following steps: (1) mixing a metal salt solution and an organic ligand solution, and carrying out ultrasonic treatment to obtain a MOF solution; (2) mixing a lithium manganese iron phosphate powder with the MOF solution obtained in step (1), and grinding to obtain a mixed material; (3) calcining the mixed material obtained in step (2) to obtain the composite lithium manganese iron phosphate positive electrode material. The application can effectively improve the electron and ion transmission capability of the LMFP, and solve the problem of poor LMFP cycle stability in related art.

## Description

The present disclosure claims the benefit of priority of Chinese Patent Application 202211611373.3, filed with China National Intellectual Property Administration on December 14, 2022, the contents of which is incorporated herein by reference in its entirety.

### TECHNICAL FIELD

The present disclosure belongs to the field of lithium-ion batteries, and relates to composite lithium manganese iron phosphate positive electrode materials and a preparation method and application thereof.

### BACKGROUND

The vigorous development of new energy vehicles has promoted the rapid growth of demand for lithium-ion power batteries. At present, positive electrode materials of lithium-ion power batteries are mainly lithium iron phosphate LFP and ternary materials. Due to the advantages of high cost performance, high safety, small resource bottleneck, and the like, the LFP has gradually become a first choice for energy storage and power battery enterprises. However, the LFP has the problem of low energy density, which has become a key factor for restricting large-scale application of lithium iron phosphate.

Lithium manganese iron phosphate (LMFP) is a positive electrode material obtained by adding manganese to LFP. By doping manganese, the LMFP can have a higher voltage platform (4.1 V vs 3.4 V), and the energy density of batteries can be increased by about 15%. Therefore, the LMFP is a positive electrode material with great application prospects. Currently, the LMFP positive electrode materials are still in the early stage of industrialization mainly due to the low electron conductivity, ion diffusion rate of LMFP and poor cycle performance, which seriously affects its commercial implementation. Therefore, improving the electron conductivity, the ion transport rate, and the electrical cycle stability of the LMFP materials is the key to the current technology.

CN111900344A discloses a method for preparing carbon-coated lithium manganese iron phosphate anode materials. In the method, firstly, a NH₄MnₓFe₁₋ₓPO₄ precursor is prepared by a co-precipitation method, then a carbon source is coated, and the carbon-coated lithium manganese iron phosphate anode materials are prepared by calcining under an inert atmosphere. This method can improve the phase purity, consistency, and controllability of the positive electrode materials, but the process ratio is difficult to accurately control, which is easy to cause the problem of particle agglomeration.

CN106058220A discloses a method for preparing titanium nitride and carbon double-coated lithium manganese iron phosphate composite materials. The method achieves the preparation of lithium manganese iron phosphate composite materials with uniform titanium nitride and carbon coating on the surface by adding a carbon source to the precursor and depositing a titanium nitride coating layer on the surface of LMFP by chemical vapor deposition. The coating layer has good uniformity and consistency, and has good charge and discharge rate performance as lithium-ion positive electrode materials. However, the process has low production efficiency, high cost, and does not mention the cycle performance of lithium manganese iron phosphate composite materials, so it lacks reference value in practical application.

CN111129463A discloses a method of preparing metal-organic framework (MOF)-coated mono-crystal ternary positive electrode materials and a precursor thereof. According to this method, a core uses a high-nickel and low-manganese precursor synthesized by a co-precipitation method, and a shell uses a manganese metal-organic framework (Mn-MOF) synthesized by coordination using Mn and an organic matter carboxylate, and the uniformity of Mn of the shall is ensured at the atomic level. The ternary anode material synthesized by the method overcomes the problems of poor cycling and thermal stability caused by high nickel, but the ternary material is harsh in production conditions and high in cost, and the cycling performance and safety performance of the ternary material with high nickel are poor, so that large-scale application in the field of power batteries is hindered.

### SUMMARY

The following is an overview of the subject matter described in detail herein. This overview is not intended to limit the protection scope of the claims.

The present disclosure provides composite lithium manganese iron phosphate positive electrode materials and a preparation method and application thereof. According to the present disclosure, the electron and ion transport capacity of lithium manganese iron phosphate (LMFP) is effectively improved and the problem of poor LMFP cycle stability in the related art is solved.

In order to achieve this purpose, the present disclosure adopts technical solutions as follows:

According to a first aspect, some embodiments of the present disclosure provide a method for preparing composite lithium manganese iron phosphate positive electrode materials. The method includes steps as follows:
(1) mixing a metal salt solution and an organic ligand solution, and performing a sonicating treatment to obtain a metal-organic framework (MOF) solution;
(2) mixing lithium manganese iron phosphate powder with the MOF solution obtained in the step (1), and performing a grinding treatment to obtain mixed materials;
(3) calcining the mixed materials obtained in the step (2) to obtain the composite lithium manganese iron phosphate positive electrode materials.

In the preparation process of the composite lithium manganese iron phosphate positive electrode materials according to the method in embodiments of the present disclosure, on the one hand, the highly extended d-π conjugated system formed by the coordination bond of the MOF and the π-π stacking effect between the organic ligands can significantly improve the electron conductivity, after the MOF is carbonized under an inert atmosphere, the organic components in the MOF form a carbon matrix, which is uniformly coated on the surface of LMFP to play a bridging role, so that an electron transfer channel is formed to improve the electrical conductivity of the LMFP electrode materials. On the other hand, MOF, as a protective coating, covers the surface of the positive electrode materials, which reduces side reactions between an active substance and an electrolyte solution, and enhances the structural stability of the materials, thereby improving the cycle performance of the electrode materials. A battery prepared by using LMFP as positive electrode materials of a lithium-ion battery exhibits good high-rate performance, high-temperature storage, and high-temperature cycle performance.

In an embodiment, a solute of the metal salt solution in the step (1) includes a magnesium salt and/or an aluminum salt.

In an embodiment, a molar concentration of the metal salt solution ranges from 0.2 mol/L to 10 mol/L, for example, 0.2 mol/L, 0.5 mol/L, 1 mol/L, 2mol/L, 5mol/L or 10mol/L, etc., and preferably it ranges from 0.5 mol/L to 2.0 mol/L.

In an embodiment, a solute of the organic ligand solution includes 2-methylimidazole and/or phthalic acid.

In an embodiment, a solvent of the organic ligand solution includes any one of methanol, ethanol or acetone, or a combination of at least two of them.

In an embodiment, a molar concentration of the organic ligand solution ranges from 0.2 mol/L to 5 mol/L, for example, 0.2 mol/L, 0.5 mol/L, 1 mol/L, 2mol/L, 3mol/L or 5mol/L, etc., and preferably it ranges from 0.5 mol/L to 2.0 mol/L.

In an embodiment, the solvent includes water.

In an embodiment, the sonicating treatment in the step (1) is performed at a temperature ranging from 20°C to 100°C, for example 20°C, 40°C, 60°C, 80°C or 100°C.

In an embodiment, the sonicating treatment is performed for a time period ranging from 0.5 h to 10 h, such as 0.5 h, 1 h, 2 h, 5 h, 8 h, or 10 h.

The MOF solution prepared by the sonicating method in the embodiments of the present disclosure makes the nucleation of the material uniform, reduce the crystallization time, and form a smaller degree of crystallinity.

In an embodiment, a chemical formula of the lithium manganese iron phosphate power in the step (2) is LiMnₓFe₁₋ₓPO₄, wherein 0.1≤x<1.

In an embodiment, the grinding treatment in the step (2) includes ball milling.

In an embodiment, the grinding treatment is performed with stirring.

In an embodiment, the stirring in the step (2) is performed at a speed ranging from 300 rpm to 800 rpm, such as 300 rpm, 400 rpm, 500 rpm, 600 rpm, or 800 rpm.

In an embodiment, the grinding treatment is performed for a time period ranging from 0.5 h to 5 h, such as 0.5 h, 1 h, 2 h, 3 h, 4 h, or 5 h.

In an embodiment, the calcining step (3) is performed under an atmosphere comprising a nitrogen atmosphere.

In an embodiment, the calcining step is performed at a temperature ranging from 200°C to 600°C, such as 200°C, 300°C, 400°C, 500°C, or 600°C.

In an embodiment, the calcining step is performed for a time period ranging from 2 h to 12 h, such as 2 h, 3 h, 5 h, 6 h, 8 h, or 12 h.

According to a second aspect, some embodiments of the present disclosure provide a composite lithium manganese iron phosphate positive electrode material. The composite lithium manganese iron phosphate positive electrode material is obtained by the method according to the first aspect. The composite lithium manganese iron phosphate positive electrode material includes a lithium manganese iron phosphate core and a MOF coating layer disposed on a surface of the lithium manganese iron phosphate core.

The coating layer of the composite lithium manganese iron phosphate positive electrode material described in the embodiment of the present disclosure has good uniformity, consistency and conductivity. The preparation process of the method is simple and controllable, and is easy to be industrially produced on a large scale.

In an embodiment, based on a mass of the composite lithium manganese iron phosphate positive electrode material being 100%, a mass fraction of the MOF coating layer ranges from 0.05% to 0.2%.

According to a third aspect, some embodiments of the present disclosure provide a positive electrode sheet. The positive electrode sheet includes the composite lithium manganese iron phosphate positive electrode materials according to the second aspect.

According to a fourth aspect, some embodiments of the present disclosure provide a lithium-ion battery. The lithium-ion battery includes the positive electrode sheet according to the third aspect.

Compared with the related arts, the present disclosure has the following beneficial effects:

(1) The coating layer of the composite lithium manganese iron phosphate positive electrode material described in the present disclosure has good uniformity, consistency and conductivity, and the preparation process is simple and controllable, and is easy to be industrially produced on a large scale.

(2) The capacity per gram for discharging of the battery prepared from the composite lithium manganese iron phosphate positive electrode materials described in the present disclosure can be 142 mAh/g or more, the 3 C rate discharge can be 97.8% or more, and the capacity retention rate after 1500 cycles at 45°C 1C can be 88.5% or more.

Other aspects can be understood after reading and understanding the accompanying drawings the detailed descriptions below.

### BRIEF DESCRIPTION OF THE DRAWINGS

The accompanying drawings are included herein to provide a further understanding of the technical solutions of the present disclosure and constitute a part of the specification, and are used to explain the technical solutions of the present disclosure together with the examples of the present disclosure, and do not constitute a limiting on the technical solutions of the present disclosure.

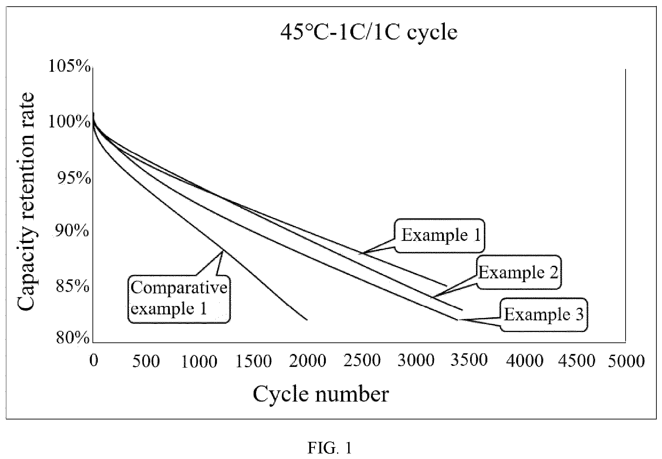

FIG. 1 is a graph comparing the cyclic performance of the composite lithium manganese iron phosphate positive electrode materials described in Examples 1-3 and Comparative Example 1.

### DETAILED DESCRIPTION

The lithium manganese iron phosphate powder described herein are prepared by the method as follows:
Lithium hydroxide, manganese nitrate, iron nitrate, and phosphoric acid were weighed according to a molar ratio of Li:Mn:Fe:P=1.05:0.5:0.5:1, and added to deionized water for dispersing, stirring and ball milling. The stirring was performed at a speed of 800 rpm for 5 h to obtain a LiMn_{0.5}Fe_{0.5}PO₄ precursor. The precursor was placed into a box-type furnace under a nitrogen atmosphere, and the box-type furnace was heated to 800°C at a heating rate of 5°C/min. The temperature was kept for 10 h, and then cooled to a room temperature to obtain lithium manganese iron phosphate positive electrode materials, which were expressed as LiMn_{0.5}Fe_{0.5}PO₄.

### Example 1

This example provides composite lithium manganese iron phosphate positive electrode materials. The method for preparing the composite lithium manganese iron phosphate positive electrode materials is as follows:
(1) Magnesium chloride was dissolved in ethanol to prepare a solution A with a metal ion concentration of 1.0 mol/L, and terephthalic acid was dissolved in ethanol to prepare a solution B with an organic ligand concentration of 1.0 mol/L. Solution A was added to solution B and sonicated at 50°C for 2 h to obtain a MOF solution;
(2) LMFP powders were added to a solution C at a solid content of 40%, ball-milled and stirred at a stirring speed of 500 rpm for 2 h, and then dried to obtain mixed materials;
(3) The mixed materials obtained in the step (2) were calcined at 500°C for 5 h, and then cooled to obtain the composite lithium manganese iron phosphate positive electrode materials. The mass fraction of the MOF coating layer in the composite lithium manganese iron phosphate positive electrode materials was 0.1%.

### Example 2

This example provides composite lithium manganese iron phosphate positive electrode materials. The method for preparing the composite lithium manganese iron phosphate positive electrode materials is as follows:
(1) Aluminum chloride was dissolved in ethanol to prepare a solution A with a metal ion concentration of 0.8 mol/L, and p-2-methylimidazole was dissolved in ethanol to prepare a solution B with an organic ligand concentration of 1.2 mol/L. Solution A was added to solution B and sonicated at 60 °C for 2 h to obtain a MOF solution;
(2) LMFP powders were added to solution C at a solid content of 40%, ball-milled and stirred at a stirring speed of 500 rpm for 2 h, and then dried to obtain mixed materials;
(3) The mixed materials obtained in step (2) were calcined at 550°C for 5 h, and then cooled to obtain the composite lithium manganese iron phosphate positive electrode materials. The mass fraction of the MOF coating layer in the composite lithium manganese iron phosphate positive electrode materials was 0.15%.

### Example 3

This example provides composite lithium manganese iron phosphate positive electrode materials. The method for preparing the composite lithium manganese iron phosphate positive electrode materials is as follows:
(1) Magnesium chloride was dissolved in ethanol to prepare a solution A with a metal ion concentration of 0.5 mol/L, and terephthalic acid was dissolved in ethanol to prepare a solution B with an organic ligand concentration of 1.5 mol/L. Solution A was added to solution B, and sonicated at 50°C for 2 h to obtain a MOF solution;
(2) LMFP powders were added to a solution C at a solid content of 40%, ball-milled and stirred at a stirring speed of 500 rpm for 2 h, and then dried to obtain mixed materials;
(3) The mixed materials obtained in the step (2) were calcined at 500°C for 5 h, and then cooled to obtain the composite lithium manganese iron phosphate positive electrode materials. The mass fraction of the MOF coating layer in the composite lithium manganese iron phosphate positive electrode materials was 0.2%.

### Comparative Example 1

The difference between this Comparative Example and Example 1 was only that the MOF coating layer was not provided. Other conditions and parameters were exactly the same as those in Example 1.

### Performance test:

The composite lithium manganese iron phosphate positive electrode materials obtained in Examples 1 to 3 were used as positive electrode materials, graphite was used as a negative electrode material, and a PE/PP high polymer material was used as a separator, which were assembled into a jelly roll in a manner of winding or lamination, the jelly roll was encapsulated in an aluminum shell or an aluminum plastic film, then a lithium-ion electrolyte composed of an organic solvent such as EC/EMC and a LiPF 6 was injected, so that an aluminum shell or a soft-packed lithium-ion battery was assembled. Performances of the lithium-ion battery were tested, and test results were shown in Table 1.

**Table 1**

| | Capacity per gram for discharging (milliamps/g) | 3C rate discharge (%) | Capacity retention after 1500 cycles at 45 °C 1C (%) |
|---|---|---|---|
| Example 1 | 142 | 98.5 | 90.8 |
| Example 2 | 145 | 97.8 | 90.2 |
| Example 3 | 143 | 98.6 | 88.5 |
| Comparative Example 1 | 140 | 94.5 | 85.1 |

From Table 1, it can be seen from Examples 1 to 3 that the batteries prepared from the composite lithium manganese iron phosphate positive electrode materials described in the present disclosure have a capacity per gram for discharging of 142 mAh/g or more, a 3 C rate discharge of 97.8% or more, and a capacity retention rate after 1500 cycles at 45°C 1C of 88.5%.

The comparison of the cycling performance of the composite lithium manganese iron phosphate positive electrode materials described in Examples 1 to 3 and Comparative Example 1 is shown in FIG. 1. By comparing Examples 1-3 and Comparative Example 1, it can be seen that: in the preparation process of the composite lithium manganese iron phosphate positive electrode materials described in Examples 1 to 3 and Comparative Example 1, on the one hand, the highly extended d-π conjugated system formed by the coordination bond of the MOF and the π-π stacking effect between the organic ligands can significantly improve the electron conductivity, after the MOF is carbonized under an inert atmosphere, the organic components in the MOF form a carbon matrix, which is uniformly coated on the surface of LMFP to play a bridging role, so that an electron transfer channel is formed to improve the electrical conductivity of the LMFP electrode materials. On the other hand, MOF, as a protective coating, covers the surface of the positive electrode materials, which reduces side reactions between an active substance and an electrolyte solution, and enhances the structural stability of the materials, thereby improving the cycle performance of the electrode materials. A battery prepared by using LMFP as positive electrode materials of a lithium-ion battery exhibits good high-rate performance, high-temperature storage, and high-temperature cycle performance.

## Claims

1. A method for preparing a composite lithium manganese iron phosphate positive electrode material, comprising:
(1) mixing a metal salt solution and an organic ligand solution, and performing a sonicating treatment to obtain a metal-organic framework (MOF) solution;
(2) mixing lithium manganese iron phosphate powder with the MOF solution obtained in the step (1), and performing a grinding treatment to obtain a mixed material;
(3) calcining the mixed material obtained in the step (2) to obtain the composite lithium manganese iron phosphate positive electrode material.

2. The method according to claim 1, wherein a solute of the metal salt solution in the step (1) comprises a magnesium salt and/or an aluminum salt.

3. The method according to claim 1 or 2, wherein a molar concentration of the metal salt solution ranges from 0.2 mol/L to 10 mol/L.

4. The method according to any one of claims 1 to 3, wherein the molar concentration of the metal salt solution ranges from 0.5 mol/L to 2.0 mol/L.

5. The method according to any one of claims 1 to 4, wherein a solute of the organic ligand solution comprises 2-methylimidazole and/or phthalic acid.

6. The method according to any one of claims 1 to 5, wherein a solvent of the organic ligand solution comprises any one or a combination of at least two of methanol, ethanol or acetone.

7. The method according to any one of claims 1 to 6, wherein a molar concentration of the organic ligand solution ranges from 0.2 mol/L to 5 mol/L.

8. The method according to any one of claims 1 to 7, wherein the molar concentration of the organic ligand solution ranges from 0.5 mol/L to 2.0 mol/L.

9. The method according to any one of claims 1 to 8, wherein the sonicating treatment in the step (1) is performed at a temperature ranging from 20°C to 100°C.

10. The method according to any one of claims 1 to 9, wherein the sonicating treatment in the step (1) is performed at a temperature ranging from 60°C to 80°C.

11. The method according to any one of claims 1 to 10, wherein the sonicating treatment is performed for a time period ranging from 0.5 h to 10 h.

12. The method according to any one of claims 1 to 11, wherein a chemical formula of the lithium manganese iron phosphate powder in the step (2) is LiMnₓFe₁₋ₓPO₄, wherein 0.1≤x<1.

13. The method according to any one of claims 1 to 12, wherein the grinding treatment in the step (2) comprises ball milling;
optionally, the grinding treatment is performed with stirring;
optionally, the stirring is performed at a speed ranging from 300 rpm to 800 rpm; and
optionally, the grinding treatment is performed for a time period ranging from 0.5 h to 5 h.

14. The method according to any one of claims 1 to 13, wherein the calcining step (3) is performed under an atmosphere comprising a nitrogen atmosphere;
optionally, the calcining step is performed at a temperature ranging from 200°C to 600°C; and
optionally, the calcining step is performed for a time period ranging from 2 h to 12 h.

15. A composite lithium manganese iron phosphate positive electrode material, obtained by the method according to any one of claims 1 to 14, wherein the composite lithium manganese iron phosphate positive electrode material comprises a lithium manganese iron phosphate core and a MOF coating layer disposed on a surface of the lithium manganese iron phosphate core.

16. The composite lithium manganese iron phosphate positive electrode material according to claim 15, wherein based on a mass of the composite lithium manganese iron phosphate positive electrode material being 100%, a mass fraction of the MOF coating layer ranges from 0.05% to 0.2%.

17. A positive electrode sheet, comprising the composite lithium manganese iron phosphate positive electrode material according to claim 15 or 16.

18. A lithium-ion battery comprising the positive electrode sheet according to claim 17.
